(19) Europäisches Patentamt
European Patent Office
Office européen des brevets

(11) **EP 4 318 628 A1**

(12) **EUROPEAN PATENT APPLICATION**
published in accordance with Art. 153(4) EPC

(43) Date of publication:
**07.02.2024 Bulletin 2024/06**

(21) Application number: **21933778.9**

(22) Date of filing: **31.03.2021**

(51) International Patent Classification (IPC):
**H01M 4/13** (2010.01)

(52) Cooperative Patent Classification (CPC):
Y02E 60/10

(86) International application number:
**PCT/CN2021/084499**

(87) International publication number:
**WO 2022/205109 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventor: **HUANG, Xuqi Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57) This application provides an electrochemical device and an electronic device. The electrochemical device includes a negative electrode including: a current collector and an active material layer located on at least one surface of the current collector, the active material layer including an inorganic thickener. The inorganic thickener is used in this application to achieve the effect of improving adhesive force and cohesive force of the negative electrode, which can reduce the amount of a thickener and improve the dynamic performance.

FIG. 1

EP 4 318 628 A1

**Description**

**TECHNICAL FIELD**

This application relates to the field of electrochemical energy storage, in particular to an electrochemical device and an electronic device.

**BACKGROUND**

As electrochemical devices (e.g., lithium-ion batteries) develop and advance, higher demands are placed on their rate performance. During high-rate charging, an active material layer of a negative electrode tends to expand, and the expansion is more significant especially when negative electrode materials are silicon materials, resulting in a decrease in the adhesive force between the active material layer and the current collector, which easily leads to deformation. If the amount of the binder is increased, the energy density may be decreased, and the dynamic performance may be deteriorated. The deterioration of the dynamic performance may lead to an increase in polarization during high-rate charging, which may easily lead to lithium plating, thereby affecting the safety performance of the electrochemical device. If the amount of binder is reduced to lower the risk of lithium plating, it may add to the risk of delamination of an electrode plate. Current improvement schemes are not satisfactory, and further improvements are desired.

**SUMMARY**

An embodiment of this application provides an electrochemical device including a negative electrode, the negative electrode including: a current collector and an active material layer located on the current collector and including an inorganic thickener.

In some embodiments, the inorganic thickener includes: at least one of attapulgite, natural clay, aluminum silicate, magnesium aluminum silicate, lithium magnesium silicate, bentonite, diatomaceous earth, fumed silica, sodium bentonite, or silica gel.

In some embodiments, the inorganic thickener is of a lamellar structure. In some embodiments, anions are present on a layer surface of particles of the lamellar structure, and cations are present on an end surface of particles of the lamellar structure. In some embodiments, the cations include: at least one of lithium ions, magnesium ions, or sodium ions.

In some embodiments, at least one of the following conditions is met: the mass percentage of the inorganic thickener in the active material layer is 0.1% to 0.5%; a specific surface area of the inorganic thickener is 0.4 m2/g to 100 m2/g; the pH of a 1 wt% aqueous solution of the inorganic thickener is 7 to 10; and the viscosity of a 1 wt% aqueous solution of the inorganic thickener is 100 mPa.s to 3000 mPa.s.

In some embodiments, the active layer further includes: an organic thickener, the organic thickener including: at least one of carboxymethyl cellulose, hydroxyethyl cellulose, hydroxypropylmethyl cellulose, sodium carboxymethyl cellulose, or lithium carboxymethyl cellulose.

In some embodiments, the mass percentage of the organic thickener in the active material layer is 0.3% to 1.5%. In some embodiments, the active layer further includes: a binder with a mass percentage of 0.8% to 5% in the active material layer, the binder including: at least one of styrene butadiene rubber, fluorinated rubber, polyacrylonitrile, polyacrylic acid, polyacrylate, polyvinyl alcohol, polytetrafluoro ethylene, or polyolefin.

In some embodiments, the cohesive force of the active material layer is 30 N/m to 40 N/m; and/or the adhesive force between the active material layer and the current collector is 15 N/m to 20 N/m.

In some embodiments, the active material layer includes: negative electrode material; the negative electrode material includes: at least one of natural graphite, artificial graphite, soft carbon, hard carbon, silicon, silicon carbon or silicon oxide materials.

Some embodiments of this application provide an electronic device, the electronic device including the electrochemical device of any of the above.

An electrochemical device as provided in some embodiments of this application includes: a positive electrode, a negative electrode and a separator located between the positive electrode and the negative electrode: wherein the negative electrode includes: a current collector and an active material layer located on the current collector and including an inorganic thickener. The inorganic thickener is used in this application to achieve the effect of improving adhesive force and cohesive force of a negative electrode, so as to reduce the amount of a thickener used, improve the dynamic performance and increase the energy density of the electrochemical device.

**BRIEF DESCRIPTION OF DRAWINGS**

FIG. 1 shows a schematic diagram of particles of a lamellar structure according to some embodiments of this application.
FIG. 2 shows a schematic diagram of a three-dimensional colloidal structure formed by particles of the lamellar structure according to some embodiments of this application.

**DETAILED DESCRIPTION OF EMBODIMENTS**

The following embodiments are intended to give those skilled in the art to a fuller understanding of this application, rather than to limit this application in any way.

Electrochemical devices (e.g., lithium-ion batteries) are widely used in various fields. In order to increase the energy density of electrochemical devices, silicon materials are used as negative electrode materials in some technologies. However, the volume expansion of silicon materials is relatively large during the lithium intercalation process, resulting in a severe decrease in the adhesive force of the active material layer of the negative electrode and a possible overall deformation of the cell. If the amount of binder is increased, the energy density is decreased and the dynamic performance of the cell is deteriorated. The deterioration of dynamic performance leads to the increase of polarization during high-rate charging, which easily causes lithium plating, thus affecting the safety performance. Decreasing the ratio of the binder or thickener results in a decrease in the adhesive force between the active material layer of the negative electrode and the current collector, increasing the risk of delamination of the electrode plate, thereby affecting the performance of the electrochemical device.

An embodiment of this application provides an electrochemical device, the electrochemical device including: a negative electrode including: a current collector and an active material layer located on the current collector and including an inorganic thickener. In some embodiments, the electrochemical device in this application can be a lithium-ion battery, copper foil or other materials can be adopted for the current collector in the negative electrode, a negative electrode material can be contained in the active material layer of the negative electrode, and the negative electrode material can include a carbon material, such as graphite, and can also include a silicon material, such as silicon dioxide. An inorganic thickener may be added to a negative electrode slurry when the negative electrode is prepared, and then the negative electrode slurry is coated on a current collector to form an active material layer, so that the active material layer of the negative electrode contains an inorganic thickener. In some embodiments, the inorganic thickener can form a network or cross-linked structure for thickening purposes by itself or with other materials, so as to improve the stability of the slurry; by using the inorganic thickener, the stability and rheological properties of the negative electrode slurry are improved, the adhesive force and cohesive force of the active material layer are improved to some extent, and the cycle performance of the electrochemical device is improved to a certain degree; the amount of the thickener and binder can be reduced, the polarization can be reduced, and the time for high-rate charging can be shortened; at the same time, the adhesive force between the active material layer and the current collector of the negative electrode is improved to prevent the negative electrode from delaminating and improve the dynamic performance of the negative electrode, which is beneficial to improving the cycle performance.

In some embodiments, the inorganic thickener includes: at least one of attapulgite, natural clay, aluminum silicate, magnesium aluminum silicate, lithium magnesium silicate, bentonite, diatomite, fumed silica, sodium bentonite or silica gel. Any one of the above-mentioned inorganic thickeners may be used in this application, and a mixture of at least two of the above-mentioned inorganic thickeners may also be used.

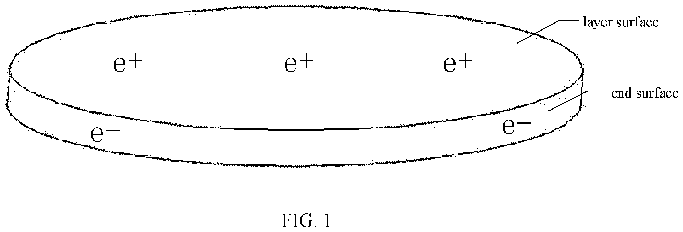

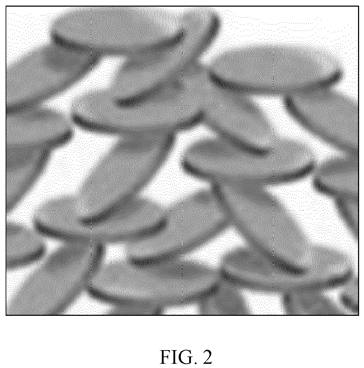

In some embodiments, the inorganic thickener is of a lamellar structure. In some embodiments, anions are present on a layer surface of particles of the lamellar structure, and cations are present on an end surface of particles of the lamellar structure. In some embodiments, the cations include: at least one of lithium ions, magnesium ions, or sodium ions. In some embodiments, referring to FIG. 1, a schematic diagram of a particle having a lamellar structure is schematically shown in FIG. 1, wherein the plane perpendicular to the thickness direction of the lamellar structure is a layer surface of the lamellar structure, and the plane between the two layer surfaces in the thickness direction of the lamellar structure and facing the peripheral side of the lamellar structure is an end surface of the lamellar structure. In some embodiments, the end surface may be oriented perpendicular to the thickness direction of the lamellar structure. The layer surfaces of the lamellar structure of the inorganic thickener gel are covered with exchangeable cations, and when the inorganic thickener is mixed with water, the water is adsorbed to the surface of the particles of the lamellar structure after being in contact with the cations, so that the particles of the lamellar structure are spread apart from each other, and at this moment, the particles of the lamellar structure rapidly expand until the particles of the lamellar structure separate from each other. Since the end surface of the particles of the lamellar structure carries negative charges and the layer surface of the particles carries positive charges, after the particles are separated, the end surface of one particle is attracted to the layer surface of another particle, thereby rapidly forming a three-dimensional colloidal structure (see FIG. 2), i.e., a card-palette structure, so that the system has increased viscosity and has a high degree of suspension property, thickening property, thixotropy and good compatibility and chemical stability. The particle of the lamellar structure is an ideal thickening rheology agent for an aqueous system.

In some embodiments, the mass percentage of the inorganic thickener in the active material layer is 0.1% to 0.5%. In some embodiments, if the mass percentage of the inorganic thickener in the active layer is too low, a significant improvement effect cannot be achieved; and if the mass percentage of the inorganic thickener in the active material layer is too high, the energy density may be affected.

In some embodiments, the specific surface area of the inorganic thickener is 0.4 m2/g to 100 m2/g. In some embodiments, when the specific surface area of an inorganic thickener is too small, the improvement effect may be less significant because of the few active surfaces. When the specific surface area of an inorganic thickener is too large, the viscosity may be improved excessively, which further weakens the improvement effect.

In some embodiments, the pH value of a 1 wt% aqueous solution of an inorganic thickener is 7 to 10. In some embodiments, the inorganic thickener is a water soluble material, and the pH value is obtained by testing the pH value of a solution prepared by mixing the inorganic thickener and water at a solid content of 1 wt%. In some embodiments, the viscosity of a 1 wt% aqueous solution of an inorganic thickener is 100 mPa.s to 3000 mPa.s.

In some embodiments, the active layer further includes: an organic thickener, the organic thickener including: at least one of carboxymethyl cellulose, hydroxyethyl cellulose, hydroxypropylmethyl cellulose, sodium carboxymethyl cellulose, or lithium carboxymethyl cellulose. In some embodiments, in an aqueous system, the particles of the inorganic thickener are actually particles of a multi-layer lamellar structure separated by a single layer of water molecules (see FIGs. 1 and 2). The higher the degree of separation of the particles of the individual lamellar structures from one another, the stronger their structure is, the greater the viscosity and the yield value (dynamic shear) are, and the more obvious the thickening effect is. Since most organic thickeners do not have a yield value, inorganic thickeners are used in combination with organic thickeners, so as to improve the viscosity, yield value and fluidity.

In some embodiments, the mass percentage of the organic thickener in the active material layer is 0.3% to 1.5%. In some embodiments, when the mass percentage of the organic thickener is too low, the improvement effect of the organic thickener is not obvious. When the mass percentage of the organic thickener is too high, the conductivity of the active material layer of the negative electrode may be decreased, which is not conducive to kinetic performance.

In some embodiments, the active layer further includes: a binder with a mass percentage of 0.8% to 5% in the active material layer, the binder including: at least one of styrene butadiene rubber, fluorinated rubber, polyacrylonitrile, polyacrylic acid, polyacrylate, polyvinyl alcohol, polytetrafluoro ethylene, or polyolefin.

In some embodiments, the cohesive force of the active material layer is 30 N/m to 40 N/m. In some embodiments, the cohesive force of the active material layer is tested according to the following method: taking an electrode plate to be tested, cutting a test piece having a width of 30 mm and a length of 100 mm to 160 mm with a blade, applying a double-sided tape with a width of 20 mm and a length of 90 mm to 150 mm onto a steel plate, applying a test piece of the electrode plate on the double-sided tape with the test face facing downwards, inserting a paper tape having a width equal to the width of the electrode plate and a length of 80 mm to 200 mm greater than the length of the test piece under the electrode plate, and fixing with a crepe tape. Use the lower fixture to fix the end of steel plate which is not pasted with the electrode plate. Flip the tape up and secure with an upper clamp, adjust the position of the upper clamp using the "up" and "down" buttons on the manual controller carried with the tensile machine. Confirm that the parameter of a force sensor is set to "500 N", and select "Adhesive Force Test" in the test item column. When the curve in the figure runs smoothly and the displacement is greater than 10 mm, the machine stops rising, and the "displacement" parameter at the top of the interface automatically resets to zero. When the curve in the figure runs smoothly and the displacement is greater than 70 mm, the machine stops rising, and the displacement automatically resets to zero. Read and record the average value of the smooth part of the curve in the figure. Release the clamp and unload the test piece.

The adhesive force between the active material layer and the current collector is 15 N/m to 20 N/m. In some embodiments, the cohesive force of the active material layer is tested according to the following method: taking an electrode plate to be tested, cutting a test piece having a width of 30 mm and a length of 100 mm to 160 mm with a blade, applying a double-sided tape with a width of 20 mm and a length of 90 mm to 150 mm onto a steel plate, applying a test piece of the electrode plate on the double-sided tape with the test face facing downwards, inserting a paper tape having a width equal to the width of the electrode plate and a length of 80 mm to 200 mm greater than the length of the test piece under the electrode plate, and fixing with a crepe tape. Use the lower fixture to fix the end of steel plate which is not pasted with the electrode plate. Flip the tape up and secure with an upper clamp, adjust the position of the upper clamp using the "up" and "down" buttons on the manual controller carried with the tensile machine. Confirm that the parameter of a force sensor is set to "500 N", and select "Adhesive Force Test" in the test item column. When the curve in the figure runs smoothly and the displacement is greater than 10 mm, the machine stops rising, and the "displacement" parameter at the top of the interface automatically resets to zero. When the curve in the figure runs smoothly and the displacement is greater than 70 mm, the machine stops rising, and the displacement automatically resets to zero. Read and record the average value of the smooth part of the curve in the figure. Release the clamp and unload the test piece. In some embodiments, the difference between the test method for cohesive force and the test method for adhesive force lies in the use of different tapes.

In some embodiments, the active material layer includes: negative electrode material; the negative electrode material includes: at least one of natural graphite, artificial graphite, soft carbon, hard carbon, silicon, silicon carbon or silicon oxide materials. The silicon oxide material can be, for example, silicon dioxide.

The positive electrode of the above electrochemical device includes a current collector and an active material layer provided on the current collector of the positive electrode, and the active material layer of the positive electrode contains a positive electrode material. The specific type of the positive electrode material is not particularly limited and may be selected according to requirements. In some embodiments, the positive electrode material includes a positive electrode material capable of absorbing and releasing lithium (Li). Embodiments of the positive electrode material capable of absorbing/releasing lithium (Li) may include lithium cobaltate, lithium nickel cobalt manganate, lithium nickel cobalt aluminate, lithium manganate, lithium ferric manganese phosphate, lithium vanadium phosphate, lithium vanadyl phosphate, lithium iron phosphate, lithium titanate, and lithium-rich manganese-based materials.

Specifically, the chemical formula of lithium cobaltate may be as shown in Formula 1:

$$LixCoaM1bO2-c \qquad \text{Formula 1}$$

Wherein M1 represents at least one selected from the group consisting of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr) and silicon (Si), the values of x, a, b and c are respectively within the following ranges: $0.8 \leq x \leq 1.2$, $0.8 \leq a \leq 1$, $0 \leq b \leq 0.2$, and $-0.1 < c < 0.2$.

The formula of lithium nickel cobalt manganate or lithium nickel cobalt aluminate may be as shown in Formula 2:

$$LiyNidM2eO2-f \qquad \text{Formula 2}$$

Wherein M2 represents at least one selected from the group consisting of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr) and silicon (Si), and the values of y, d, e and f are respectively within the following ranges: $0.8 \leq y \leq 1.2$, $0.3 \leq d \leq 0.98$, $0.02 \leq e \leq 0.7$, and $-0.1 \leq f \leq 0.2$.

The formula of the lithium manganate may be as shown in Formula 3:

$$LizMn2-gM3gO4-h \qquad \text{Formula 3}$$

Wherein M3 represents at least one selected from the group consisting of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr) and tungsten (W), and the values of z, g and h are respectively within the following ranges: $0.8 \leq z \leq 1.2$, $0 \leq g < 1.0$ and $-0.2 \leq h \leq 0.2$.

A conductive agent may be added to the active material layer of the positive electrode and the active material layer of the negative electrode of the electrochemical device, and the conductive agent may include at least one of conductive carbon black, graphite, graphene, carbon nanotubes, carbon fibers, or carbon black.

In some embodiments, the separator includes at least one of polyethylene, polypropylene, polyvinylidene fluoride, polyethylene terephthalate, polyimide, or aramid. For example, polyethylene includes at least one selected from high density polyethylene, low density polyethylene or ultra high molecular weight polyethylene. Particularly, polyethylene and polypropylene have a good effect of preventing short circuits and can improve the stability of a battery through a shutdown effect. In some embodiments, the thickness of the separator is within the range of about 5 $\mu$m to 500 $\mu$m.

In some embodiments, the surface of the separator may further include a porous layer disposed on at least one surface of the substrate of the separator, the porous layer including inorganic particles and a binder. The inorganic particles are selected from at least one of the group consisting of aluminum oxide (Al2O3), silicon oxide (SiO2), magnesium oxide (MgO), titanium oxide (TiO2), hafnium oxide (HfO2), tin oxide (SnO2), cerium oxide (CeO2), nickel oxide (NiO), zinc oxide (ZnO), calcium oxide (CaO), zirconium oxide (ZrO2), yttrium oxide (Y2O3), silicon carbide (SiC), boehmite, aluminum hydroxide, magnesium hydroxide, calcium hydroxide, or barium sulfate. In some embodiments, the pores of the separator have a diameter within the range of about 0.01 $\mu$m to 1 $\mu$m. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinyl pyrrolidone, polyvinyl ether, polymethyl methacrylate, polytetrafluoro ethylene, or polyhexafluoropropylene. The porous layer on the surface of the separator can improve the heat resistance, oxidation resistance and electrolyte wetting property of the separator and enhance the adhesive force between the separator and the electrode plate.

In some embodiments of this application, the electrochemical device is a coiled electrochemical device or a stacked electrochemical device. In some embodiments, the electrochemical device includes a lithium-ion battery, but this application is not so limited.

In some embodiments, the electrochemical device further includes: an electrolyte includes a polynitrile compound; the polynitrile compound including: at least one of 1, 3, 6-tricarbonitrile, 1, 2, 6-tricarbonitrile, 1, 3, 5-pentanetricarbonitrile, 1, 2, 3-tris(2-cyanoethoxy)propane, succinonitrile, or adiponitrile; wherein the mass ratio of the positive electrode material to the polynitrile compound is 1 :(0.001 to 0.005).

In some embodiments, the electrolyte further includes a lithium salt and a non-aqueous solvent. The lithium salt is selected from one or more of LiPF6, LiBF4, LiAsF6, LiClO4, LiB (C6H5) 4, LiCH 3SO3, LiCF3SO3, LiN(SO2CF3)2, LiC(SO2CF3)3, LiSiF6, LiBOB, or lithium difluoroborate. For example, LiPF6 may be selected as the lithium salt, as it can provide a high ionic conductivity and improve cycle characteristics.

The non-aqueous solvent can be a carbonate compound, a carboxylate compound, an ether compound, other organic solvents, or combinations thereof. The carbonate compound can be a chain carbonate compound, a cyclic carbonate compound, a fluorocarbonate compound, or a combination thereof. Embodiments of chain carbonate compounds are diethyl carbonate (DEC), dimethyl carbonate (DMC), dipropyl carbonate (DPC), methyl propyl carbonate (MPC), ethyl propyl carbonate (EPC), methyl ethyl carbonate (MEC) and combinations thereof. Embodiments of the cyclic carbonate compound are ethylene carbonate (EC), propylene carbonate (PC), butylene carbonate (BC), vinyl ethylene carbonate (VEC), or a combination thereof. Embodiments of the fluorocarbonate compound are fluoroethylene carbonate (FEC), 1, 2-difluoroethylene carbonate, 1, 1-difluoroethylene carbonate, 1, 1, 2-trifluoroethylene carbonate, 1, 1, 2, 2-tetrafluoroethylene carbonate, 1-fluoro-2-methylethylene carbonate, 1-fluoro-1-methyl ethylene carbonate, 1, 2-difluoro-1-methylethylene carbonate, 1, 1, 2-trifluoro-2-methylethylene carbonate, trifluoromethylethylene carbonate, or combinations thereof.

Embodiments of carboxylic ester compounds are methyl acetate, ethyl acetate, n-propyl acetate, t-butyl acetate, methyl propionate, ethyl propionate, propyl propionate, γ-butyrolactone, decalactone, valerolactone, mevalonolactone, caprolactone, methyl formate, or combinations thereof.

Embodiments of ether compounds are dibutyl ether, tetraglyme, diglyme, 1, 2-dimethoxyethane, 1, 2-diethoxyethane, ethoxymethoxyethane, 2-methyl tetrahydrofuran, tetrahydrofuran, or combinations thereof.

Embodiments of other organic solvents are dimethylsulfoxide, 1, 2-dioxolane, sulfolane, methylsulfolane, 1, 3-dimethyl-2-imidazolidinone, N-methyl-2-pyrrolidone, formamide, dimethylformamide, acetonitrile, trimethyl phosphate, triethyl phosphate, trioctyl phosphate, and phosphate esters or combinations thereof.

It will be appreciated by those skilled in the art that the preparation method of an electrochemical device (e.g., a lithium-ion battery) described above is merely an example. Other methods commonly used in the art may be employed without departing from the disclosure of this application.

Embodiments of this application also provide an electronic device including the electrochemical device described above. The electronic device of the embodiments of this application is not particularly limited, and may be any electronic device known in the art. In some embodiments, the electronic device may include, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini optical disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, a power tool, flash lights, cameras, and large household batteries.

Some specific embodiments and comparative embodiments are listed below to better illustrate this application, whereina lithium-ion battery is used as an example.

**Embodiment 1**

**Positive electrode preparation:**

Lithium cobaltate, acetylene black and polyvinylidene fluoride were mixed uniformly in a weight ratio of 95:3:2, and then the mixture was dispersed in a solvent and stirred, and vacuum was applied to obtain a positive electrode slurry. The positive electrode slurry was then uniformly coated on an aluminum foil with the thickness of between 8 μm and 13 μm, dried and then compacted by a roller press, and subjected to slitting and cutting to obtain a positive electrode (also referred to as a positive electrode plate).

**Negative electrode Preparation:**

CMC-Li (lithium carboxymethyl cellulose) powder was added into deionized water and blended until the solid content of the glue solution is 1.5%, and stirring was conducted uniformly at a slow speed of 500rpm for 5h to obtain CMC glue solution. The lithium magnesium silicate powder was added into deionized water, and blended until the solid content of the glue solution is 1.5%, and stirring was conducted uniformly at a slow speed of 500rpm for 1h to obtain a lithium magnesium silicate glue solution. A CMC gum solution was added to the obtained lithium magnesium silicate gum solution to obtain a thickener gum solution; artificial graphite was added to the obtained thickener glue solution, and after stirring was conducted at a slow speed of 30rpm for 30min, deionized water was added to adjust the solid content of the slurry to 63%, and then kneaded at a speed of 30rpm for 1.5h to obtain a slurry 1. A styrene butadiene rubber binder was added to slurry 1, stirring was conducted at a slow speed of 500 rpm for 0.5 h, deionized water was added to adjust the solid content of slurry 1 to 48%, and then rapid stirring was conducted at a speed of 2000 rpm for 1.5 h to obtain slurry 2, wherein the mass ratio of the carbon material, the binder, CMC and lithium magnesium silicate is 97: 1.5: 1.2:0.3. The obtained slurry 2 was filtered through a 150 mesh sieve to obtain a slurry 3. The slurry 3 is coated on the surface of a copper foil with a thickness of 10 $\mu$m at a coating speed of 2m/min; during the coating, the copper foil was placed in an oven for blowing with a fan to achieve heating and drying, wherein the fan speed is 30 m/s and the oven temperature is 100°C; and a negative electrode (also known as a negative electrode plate) with a coating thickness of 100 $\mu$m was obtained after the heating and drying.

**Preparation of separator:**

A porous polyethylene (PE) film was used as a separator;

Preparation of lithium-ion battery:

The positive electrode, the separator and the negative electrode were stacked in sequence so that the separator was located between the positive electrode and the negative electrode to perform the function of separation, and winding was conducted to obtain an electrode assembly. The electrode assembly wasplaced in an outer packaging aluminum-plastic film, and after the moisture was removed at80°C, an electrolyte was injected for encapsulation, and a lithium-ion battery was obtained through a process flow of formation, degassing and edge cutting.

Each of the other embodiments differs from Embodiment 1 only lies in that one or more of the types and proportions of the negative electrode material, binder, organic thickener and inorganic thickener in the negative electrode are different, and the specific differences are shown in the following table.

Test methods for various parameters of this application are described below.

**Adhesive force test:**

An electrode plate to be tested was taken, a test piece with a width of 30 mm and a length of 100 mm to 160 mm was cut using a blade, a double-sided adhesive tape with a width of 20 mm and a length of 90 mm to 150 mm was attached to a steel plate, a test piece of the electrode plate was attached to the double-sided adhesive tape with the test face facing downwards, and a paper tape with a width equal to the width of the electrode plate and a length of 80 mm to 200 mm greater than the length of the test piece was inserted under the electrode plate, and fixed with a wrinkle adhesive. Use the lower fixture to fix the end of steel plate which is not pasted with the electrode plate. Flip the tape up and secure with an upper clamp, adjust the position of the upper clamp using the "up" and "down" buttons on the manual controller carried with the tensile machine. Confirm that the parameter of a force sensor is set to "500 N", and select "Adhesive Force Test" in the test item column. When the curve in the figure runs smoothly and the displacement is greater than 10 mm, the machine stops rising, and the "displacement" parameter at the top of the interface automatically resets to zero. When the curve in the figure runs smoothly and the displacement is greater than 70 mm, the machine stops rising, and the displacement automatically resets to zero. Read and record the average value of the smooth part of the curve in the figure. Release the clamp and unload the test piece.

**Cohesive force test:**

An electrode plate to be tested was taken, a test piece with a width of 30 mm and a length of 100 mm to 160 mm was cut using a blade, a double-sided adhesive tape with a width of 20 mm and a length of 90 mm to 150 mm was attached to a steel plate, a test piece of the electrode plate was attached to the double-sided adhesive tape with the test face facing downwards, and a paper tape with a width equal to the width of the electrode plate and a length of 80 mm to 200 mm greater than the length of the test piece was inserted under the electrode plate, and fixed with a wrinkle adhesive. Use the lower fixture to fix the end of steel plate which is not pasted with the electrode plate. Flip the tape up and secure with an upper clamp, adjust the position of the upper clamp using the "up" and "down" buttons on the manual controller carried with the tensile machine. Confirm that the parameter of a force sensor is set to "500 N", and select "Adhesive Force Test" in the test item column. When the curve in the figure runs smoothly and the displacement is greater than 10 mm, the machine stops rising, and the "displacement" parameter at the top of the interface automatically resets to zero. When the curve in the figure runs smoothly and the displacement is greater than 70 mm, the machine stops rising, and the displacement automatically resets to zero. Read and record the average value of the smooth part of the curve in the figure. Release the clamp and unload the test piece. The testing method for cohesive force differs from the testing method for adhesive force in the type of tape used.

**Test method for Lithium plating rate:**

At 25°C, the battery was discharged to 3V with a constant current of 0.2C, then charged to 100% SOC (state of charge) at a specific rate. This is one charge-discharge cycle. After 10 charge-discharge cycles, the battery was charged to 100% SOC at a specific rate. Upon completion of charging, the battery was disassembled to observe the lithiation plating condition at the interface. The test was repeated until the minimum rate of battery lithiation plating was determined.

**The pH test method for inorganic thickener:**

The pH value was tested according to GB/T 9724-2007 General Rules for pH Value Determination of Chemical Reagents. The instruments used include: Leici PHS-3C pH meter as the electrode; and E-201F pH composite electrode.

Test Method: the powder of the inorganic thickener was dissolved in water to prepare an aqueous solution with a mass percentage of 1%. The solution was stirred for 10 minutes, and the temperature of the aqueous solution was maintained between 20°C and 25°C. The pH of the aqueous solution was directly measured with a calibrated pH meter. The test was repeated three times, and the average value was taken.

**Specific surface area (BET) test method:**

at constant temperature and low temperature, the adsorption amount of gas on the solid surface at different relative pressures was measured. Based on the Brunauer-Emmett-Teller adsorption theory and its formula, the monolayer adsorption amount of the sample was calculated so as to calculate the specific surface area of the solid.

BET's formula:

$$\frac{P}{w(P0-p)} = \frac{1}{WmC} + (c-1)/(WmC) \cdot P/P0$$

wherein: W-mass of gas adsorbed by solid sample at relative pressure
Wm---the saturated adsorption capacity of the gas filled with a monolayer
slope: $(c-1)/(WmC)$, intercept: $1/WmC$, total specific surface area: $(Wm*N*Acs/M)$

Specific surface area: S = St/m, wherein m is the mass of the sample, Acs: the average area occupied per N2 molecule is 16.2 A2.

1.5g to 3.5g of powder sample was weighed into the test sample tube of TriStar II 3020, degassing was conducted at 200°C for 120 min, and then testing was performed.

Table 1 shows various parameters and evaluation results of Embodiments 1 to 5 and Comparative Embodiments 1 to 2. The differences in the preparation parameters of Embodiments 1 to 5 and Comparative Embodiments 1 to 2 are only in the parameters shown in Table 1, and all other preparation parameters are the same.

Table 1

| Item | Negative electrode slurry | | | | | | | | Negative electrode | | Battery |
|------|------|------|------|------|------|------|------|------|------|------|------|
| | Negative electrode material | Negative electrode material Content | Binder | Binder Content | Organic thickener | Organic thickener Content | Inorganic thickener | Inorganic thickener Content | Adhesive force (N/m) | Cohesive force (N/m) | Lithium plating rate |
| Embodiment 1 | Artificial graphite | 98.2% | Styrene butadiene rubber | 1.50% | / | / | Lithium magnesium silicate | 0.30% | 18.1 | 38.0 | 3.2C |
| Embodiment 2 | Artificial graphite | 98.2% | Styrene butadiene rubber | 1.50% | / | / | Attapulgite clay | 0.30% | 15.8 | 30.5 | 2.7C |
| Embodiment 3 | Artificial graphite | 98.2% | Styrene butadiene rubber | 1.50% | / | / | Magnesium aluminum silicate | 0.30% | 16.3 | 33.4 | 2.8C |
| Embodiment 4 | Artificial graphite | 98.2% | Styrene butadiene rubber | 1.50% | / | / | Silicone gel | 0.30% | 18.1 | 35.2 | 2.8C |
| Embodiment 5 | Artificial graphite | 98.2% | Styrene butadiene rubber | 1.50% | / | / | Bentonite | 0.30% | 16.3 | 32.6 | 2.7C |
| Comparative Embodiment 1 | Artificial graphite | 97% | Styrene butadiene rubber | 1.50% | CMC-Li | 1.50% | / | / | 10.2 | 24.2 | 2.5C |
| Comparative Embodiment 2 | Natural graphite | 97% | Styrene butadiene rubber | 1.50% | CMC-Li | 1.50% | / | / | 9.3 | 22.4 | 1.8C |

Note: in Table 1, the proportion of active material, the proportion of thickener 1 and the content of thickener 2 are the mass percentage content of the active material layer, and the symbol "/" indicates exclusion.

An inorganic thickener was used in Embodiments 1 to 5, and an organic thickener was used in Comparative Embodiments 1 and 2. It can be seen from Table 1 that the adhesive force and cohesive force of the negative electrode in Embodiment 1 are much higher than those in Comparative Embodiments 1 and 2, and the lithium plating rate of the lithium-ion battery in Embodiments 1 to 5 is also much higher than that in Comparative Embodiment 1. It can be seen therefrom that using an inorganic thickener in the negative electrode can reduce the amount of CMC and improve the adhesive force, cohesive force and dynamic performance.

Comparative Embodiments 1 to 5 show that the adhesive force, cohesive force and ALP of the negative electrode can be improved by using different types of inorganic thickeners, wherein the performance is the best when the inorganic thickener is lithium magnesium silicate.

Table 2 shows various parameters and evaluation results of Embodiments 6 to 17 and Comparative Embodiments 3 to 5. The difference in preparation parameters between Embodiments 6 to 17 and Comparative Embodiments 3 to 5 is only in the parameters shown in Table 2; all other preparation parameters are the same.

Table 2

| Item | Negative electrode slurry | | | | | | | | Negative electrode | | Battery |
|---|---|---|---|---|---|---|---|---|---|---|---|
| | Negative electrode material | Negative electrode material Content | Binder | Binder Content | Organic thickener | Organic thickener Content | Inorganic thickener | Inorganic thickener Content | Adhesive force (N/m) | Cohesive force (N/m) | Lithium plating Rate |
| Embodiment 6 | Artificial graphite | 97% | Styrene butadiene rubber | 1.5 0% | CM C-Li | 1.20% | Lithium magnesium silicate | 0.30% | 18.2 | 38.5 | 3.2C |
| Embodiment 7 | Artificial graphite | 97% | Styrene butadiene rubber | 1.5 0% | CM C-Li | 1.40% | Lithium magnesium silicate | 0.10% | 15.7 | 33.2 | 2.9C |
| Embodiment 8 | Artificial graphite | 97% | Styrene butadiene rubber | 1.5 0% | CM C-Li | 1.00% | Lithium magnesium silicate | 0.50% | 19.7 | 40.3 | 3.1C |
| Embodiment 9 | Natural graphite | 97% | Styrene butadiene rubber | 1.5 0% | CM C-Li | 1.20% | Lithium magnesium silicate | 0.30% | 16.3 | 33.4 | 2.1C |
| Embodiment 10 | Hard carbon | 97% | Styrene butadiene rubber | 1.5 0% | CM C-Li | 1.20% | Lithium magnesium silicate | 0.30% | 12.6 | 26.4 | 3.5C |
| Embodiment 11 | Artificial graphite + Silicon carbon | 92%+5% | Styrene butadiene rubber | 1.5 0% | CM C-Li | 1.20% | Lithium magnesium silicate | 0.30% | 19.4 | 43.5 | 3.0C |
| Embodiment 12 | Artificial graphite + Silicon oxide | 92%+5% | Styrene butadiene rubber | 1.5 0% | CM C-Li | 1.20% | Lithium magnesium silicate | 0.30% | 19.2 | 42.8 | 3.0C |
| Embodiment 13 | Artificial graphite | 97% | Polyacrylonitrile | 1.5 0% | CM C-Li | 1.20% | Lithium magnesium silicate | 0.30% | 18.9 | 42.6 | 3.0C |
| Embodiment 14 | Artificial graphite | 97% | Polyacrylic acid | 1.5 0% | CM C-Li | 1.20% | Lithium magnesium silicate | 0.30% | 20.4 | 45.8 | 3.1C |

| Item | Negative electrode slurry | | | | | | | | Negative electrode | | Battery |
|---|---|---|---|---|---|---|---|---|---|---|---|
| | Negative electrode material | Negative electrode material Content | Binder | Bin der Co nte nt | Org anic thic ken er | Organic thickene r Content | Inorganic thickener | Inorganic thickener Content | Adhesi ve force (N/m) | Cohesi ve force (N/m) | Lithium plating Rate |
| Embodiment 15 | Artificial graphite | 97% | Styrene butadiene rubber | 1.5 0% | CM C-Na | 1.20% | Lithium magnesium silicate | 0.30% | 17.9 | 38.2 | 2.8C |
| Embodiment 16 | Artificial graphite | 97.20% | Styrene butadiene rubber | 1.5 0% | CM C-Li | 1.04% | Lithium magnesium silicate | 0.26% | 16.7 | 38.3 | 3.3C |
| Embodiment 17 | Artificial graphite | 97.50% | Styrene butadiene rubber | 1.5 0% | CM C-Li | 0.80% | Lithium magnesium silicate | 0.20% | 13.5 | 26.4 | 3.5C |
| Comparative Embodiment 3 | Hard carbon | 97% | Styrene butadiene rubber | 1.5 0% | CM C-Li | 1.50% | / | / | 7.8 | 20.1 | 2.8C |
| Comparative Embodiment 4 | Artificial graphite + Silicon carbon | 92%+5% | Styrene butadiene rubber | 1.5 0% | CM C-Li | 1.50% | / | / | 12.4 | 25.9 | 2.4C |
| Comparative Embodiment 5 | Artificial graphite + Silicon oxide | 92%+5% | Styrene butadiene rubber | 1.5 0% | CM C-Li | 1.50% | / | / | 13.3 | 27.6 | 2.4C |

Note: in Table 2, the proportion of active material, the proportion of thickener 1 and the content of thickener 2 are the mass percentage based on the active material layer, and the symbol "/" indicates exclusion.

From Embodiments 6 to 8, it can be seen that the improvement effect is better when the mass percentage of lithium magnesium silicate in the active material layer of the negative electrode is within the range of 0.1% to 0.5%, wherein the effect is best when the mass percentage of lithium magnesium silicate in the active material layer of the negative electrode is 0.3%.

As can be seen from Embodiments 6, 9 to 12, when the negative electrode material is artificial graphite, natural graphite, a mixture of artificial graphite and silicon carbon, or a mixture of artificial graphite and silicon oxide, better effects can be achieved, and the surface properties of different negative electrode materials are different, so that the dynamic properties are different.

It can be seen from Embodiments 6, 13 to 14 that better effects can be achieved when the binder is styrene butadiene rubber, polyacrylonitrile and polyacrylic acid, and it can be seen that a stronger cohesive force can be achieved by using a solution type high molecular binder.

It can be seen from Embodiments 6 and 15 that better effects can be achieved when the organic thickener is CMC-Li or CMC-Na (sodium carboxymethyl cellulose), wherein the dynamic performance achieved using CMC-Li as the organic thickener is better than that achieved using CMC-Na as the organic thickener.

It can be seen from Embodiments 6, 16 to 17 that good effects can be achieved when the mass percentage of the organic thickener in the active material layer of the negative electrode is 0.8% to 1.2%.

Various parameters and evaluation results of Embodiments 18 to 22 are shown in Table 3. The difference in preparation parameters between Embodiments 18 to 22 and Embodiment 1 only lies in the parameters shown in Table 3, and the rest of the preparation parameters are the same.

Table 3

| Item | Negative electrode material | Negative electrode material Content | Binder | Binder Content | Organic thickener | Organic thickener Content | Inorganic thickener | Inorganic thickener Cont ent | Inorganic thickener pH | Inorganic Thickener' specific Surface Area m2/g | Cohesive force (N/m) | Lithium plating rate |
|---|---|---|---|---|---|---|---|---|---|---|---|---|
| Embodi ment 18 | Artificial graphite | 97% | Styrene butadiene rubber | 1.50% | CMC-Li | 1.4% | Lithium magnesiu m silicate | 0.10 % | 7.4 | 0.58 | 15.7 | 2.9C |
| Embodi ment 19 | Artificial graphite | 97% | Styrene butadiene rubber | 1.50% | CMC-Li | 1.2% | Lithium magnesiu m silicate | 0.30 % | 7.6 | 0.58 | 18.2 | 3.2C |
| Embodi ment 20 | Artificial graphite | 97% | Styrene butadiene rubber | 1.50% | CMC-Li | 0.75% | Lithium magnesiu m silicate | 0.75 % | 7.7 | 0.58 | 19.7 | 3.1C |
| Embodi ment 21 | Artificial graphite | 97% | Styrene butadiene rubber | 1.50% | CMC-Li | 0.5% | Lithium magnesiu m silicate | 1.00 % | 8.0 | 0.58 | 16.1 | 3.0C |
| Embodi ment 22 | Artificial graphite | 97% | Styrene butadiene rubber | 1.50% | CMC-Li | 0% | Lithium magnesiu m silicate | 1.50 % | 8.3 | 0.58 | 14.2 | 2.8C |
| Note: The content in Table 3 is the mass percentage based on the active material layer. | | | | | | | | | | | | |

As can be seen from Comparative Embodiments 18 to 22, with the increase in the mass percentage of the inorganic thickener, both the cohesive force and the lithium plating rate increase first and then decrease, and when the mass percentage of the inorganic thickener is within the range of 0.1% to 1%, the improvement effect is better.

It can be seen from table 3 that the aqueous solution of the inorganic thickener is neutral to weakly alkaline, and when the specific surface area of the inorganic thickener is between 0.4 $m^2/g$ and 0.8 $m^2/g$, the improvement effect is better.

The above description is only a preferred embodiment of this application and an illustration of the technique principles employed. It will be understood by those skilled in the art that the scope of the disclosure referred to in this application is not limited to any technical solution formed by particular combination of the technical features described above, but is intended to encompass any technical solution formed by the combination of the technical features described above or their equivalents. For example, the above-mentioned features and the technical features with similar functions disclosed in this application are replaced with each other to form a technical solution.

**Claims**

1. An electrochemical device, wherein the electrochemical device comprises a negative electrode,
   wherein the negative electrode comprises a current collector and an active material layer located on at least one surface of the current collector, the active material layer comprising an inorganic thickener.

2. The electrochemical device according to claim 1, wherein the inorganic thickener comprises one or more selected from the group consisting of attapulgite, natural clay, aluminum silicate, magnesium aluminum silicate, lithium magnesium silicate, bentonite, diatomaceous earth, fumed silica, sodium bentonite, and silica gel.

3. The electrochemical device according to claim 1, wherein the inorganic thickener is of a lamellar structure.

4. The electrochemical device according to claim 3, wherein anions are present on a layer surface of particles of the lamellar structure, and cations are present on an end surface of particles of the lamellar structure.

5. The electrochemical device according to claim 4, wherein the cations comprise at least one of lithium ions, magnesium ions, or sodium ions.

6. The electrochemical device according to claim 1, wherein at least one of the following conditions is satisfied:

   a mass percentage of the inorganic thickener in the active material layer is 0.1% to 0.5%;
   a specific surface area of the inorganic thickener is 0.4 $m^2/g$ to 100 $m^2/g$;
   a pH of a 1 wt% aqueous solution of the inorganic thickener is 7 to 10; or
   a viscosity of a 1 wt% aqueous solution of the inorganic thickener is 100 mPa.s to 3000 mPa.s.

7. The electrochemical device according to claim 1, wherein the active material layer further comprises an organic thickener; the organic thickener comprises at least one of carboxymethyl cellulose, hydroxyethyl cellulose, hydroxypropylmethyl cellulose, sodium carboxymethyl cellulose, or lithium carboxymethyl cellulose.

8. The electrochemical device according to claim 1, wherein a mass percentage of the organic thickener in the active material layer is 0.3% to 1.5%.

9. The electrochemical device according to claim 1, wherein the active material layer further comprises a binder,

   a mass percentage of the binder in the active material layer is 0.8% to 5%;
   the binder comprises one or more seleceted from the group consisting of styrene butadiene rubber, fluorinated rubber, polyacrylonitrile, polyacrylic acid, polyacrylate, polyvinyl alcohol, polytetrafluoro ethylene, and polyolefin.

10. The electrochemical device according to claim 1, wherein

    a cohesive force of the active material layer is 30 N/m to 40 N/m; and/or
    an adhesive force between the active material layer and the current collector is 15 N/m to 20 N/m.

11. The electrochemical device according to claim 1, wherein

the active material layer comprises a negative electrode material; the negative electrode material comprises at least one of natural graphite, artificial graphite, soft carbon, hard carbon, silicon, silicon carbon or silicon oxide materials.

12. An electronic device comprising the electrochemical device according to any one of claims 1 to 11.

layer surface

end surface

e+      e+      e+

e⁻                    e⁻

FIG. 1

FIG. 2

# INTERNATIONAL SEARCH REPORT

| International application No. |
| --- |
| **PCT/CN2021/084499** |

| A. | CLASSIFICATION OF SUBJECT MATTER |
| --- | --- |
| | H01M 4/13(2010.01)i |

According to International Patent Classification (IPC) or to both national classification and IPC

| B. | FIELDS SEARCHED |
| --- | --- |

Minimum documentation searched (classification system followed by classification symbols)

    H01M

Documentation searched other than minimum documentation to the extent that such documents are included in the fields searched

Electronic data base consulted during the international search (name of data base and, where practicable, search terms used)

    WPI, EPODOC, CNPAT, CNKI, IEEE: 电池, 负极, 阳极, 增粘, 增稠, 粘土, 硅酸镁锂, 硅酸镁铝, 锂皂石, battery, cell, negative, anode, clay, viscosity, tackifier, thickener, lithium, magnesium, aluminum, silicate, laponite

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111316475 A (LG CHEMICAL LTD.) 19 June 2020 (2020-06-19)<br>    description, paragraphs 0010-0167 | 1-12 |
| X | US 2018034047 A1 (SAMSUNG SDI CO., LTD.) 01 February 2018 (2018-02-01)<br>    description, paragraphs 0020-0065 | 1-12 |
| X | CN 109715684 A (SOLVAY SPECIALTY POLYMERS ITALY S.P.A.) 03 May 2019<br>(2019-05-03)<br>    description, paragraphs 0016-0118 | 1-12 |
| X | CN 110534699 A (LI JINDI) 03 December 2019 (2019-12-03)<br>    description, paragraphs 0023-0092 | 1-12 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **16 December 2021** | **30 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | | International application No. | | | |
|---|---|---|---|---|---|---|
| Information on patent family members | | | PCT/CN2021/084499 | | | |

| Patent document cited in search report | | | Publication date (day/month/year) | Patent family member(s) | | | Publication date (day/month/year) |
|---|---|---|---|---|---|---|---|
| CN | 111316475 | A | 19 June 2020 | WO | 2019088809 | A2 | 09 May 2019 |
| | | | | US | 2020259162 | A1 | 13 August 2020 |
| | | | | KR | 102227312 | B1 | 15 March 2021 |
| | | | | EP | 3690991 | A2 | 05 August 2020 |
| | | | | KR | 20190051870 | A | 15 May 2019 |
| | | | | WO | 2019088809 | A3 | 20 June 2019 |
| | | | | EP | 3690991 | A4 | 25 November 2020 |
| US | 2018034047 | A1 | 01 February 2018 | KR | 102258081 | B1 | 27 May 2021 |
| | | | | KR | 20180013105 | A | 07 February 2018 |
| | | | | US | 10559818 | B2 | 11 February 2020 |
| CN | 109715684 | A | 03 May 2019 | JP | 2019524928 | A | 05 September 2019 |
| | | | | US | 10968362 | B2 | 06 April 2021 |
| | | | | EP | 3484933 | B1 | 15 April 2020 |
| | | | | US | 2019284428 | A1 | 19 September 2019 |
| | | | | KR | 20190029653 | A | 20 March 2019 |
| | | | | WO | 2018011244 | A1 | 18 January 2018 |
| | | | | EP | 3484933 | A1 | 22 May 2019 |
| CN | 110534699 | A | 03 December 2019 | CN | 110534699 | B | 13 July 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 97242007 T